# FASCICULE DE BREVET EUROPEEN

(11) **EP 4 078 555 B1**
(45) Date de publication et mention de la délivrance du brevet: **29.10.2025**
(21) Numéro de dépôt: 20848957.5
(22) Date de dépôt: 17.12.2020
(51) Int. Cl.: G08G 1/0965, G08G 1/087, G08G 1/0967

(54) **PROCEDE DE GESTION D'UN ETAT DE CRISE D'UN PREMIER VEHICULE ET DISPOSITIF DE GESTION ASSOCIE**
VERFAHREN ZUM VERWALTEN EINES NOTZUSTANDS EINES ERSTEN FAHRZEUGS UND ZUGEHÖRIGE VERWALTUNGSVORRICHTUNG
METHOD FOR MANAGING AN EMERGENCY STATE OF A FIRST VEHICLE AND ASSOCIATED MANAGING DEVICE

(30) Priorité: 20.12.2019 FR 1915167
(43) Date de publication de la demande: 26.10.2022
(73) Titulaire: Orange, 92130 Issy-les-Moulineaux (FR)
(72) Inventeur: MONCOMBLE, Ghislain, 92326 Châtillon Cedex (FR); LEFEBVRE, Mathieu, 92326 Châtillon Cedex (FR); ODINOT, Jean-Marc, 92326 Châtillon Cedex (FR)
(74) Mandataire: Cabinet Beau de Loménie
(86) Numéro de dépôt international: PCT/FR2020/052510
(87) Numéro de publication internationale: WO 2021/123648

(56) Documents cités:
- US-A1- 2009 174 572
- US-A1- 2016 210 858
- US-A1- 2017 364 069

## Description

### Domaine Technique

La présente invention se rapporte au domaine des véhicules et de l'assistance à la conduite d'un véhicule, et concerne plus particulièrement une technique de gestion d'un état de crise d'un véhicule.

### Technique antérieure

De façon connue, lorsqu'un véhicule d'intérêt général prioritaire en cours d'intervention (tel qu'une ambulance, un camion de pompier ou un véhicule de police) circule sur une voie de circulation, il signale sa présence aux véhicules sur son trajet via un moyen d'alerte tel qu'une sirène ou un gyrophare.

Par usage et/ou pour respecter le code de la route, les véhicules alertés laissent alors passer le véhicule d'intérêt général prioritaire afin de faciliter son déplacement, par exemple en se rangeant sur le côté ou en cédant la priorité au niveau d'une intersection.

Cependant, les conducteurs des véhicules présents sur le trajet du véhicule d'intérêt général prioritaire peinent parfois à localiser le véhicule d'intérêt général prioritaire, et ainsi peuvent avoir du mal à déterminer s'ils doivent réaliser une manœuvre afin de laisser passer le véhicule d'intérêt général prioritaire. Par exemple, un conducteur entendant une sirène peut ne pas arriver à déterminer si le véhicule d'intérêt général prioritaire arrive en face ou par derrière. De même, un conducteur visualisant le signal lumineux d'un gyrophare peut avoir du mal à déterminer sur quelle voie circule le véhicule d'intérêt général prioritaire.

En outre, il n'existe actuellement pas de solution permettant de localiser efficacement un véhicule qui n'est pas un véhicule d'intérêt général prioritaire (par exemple un véhicule de particulier), mais qui se trouve de manière exceptionnelle en état de crise, tel qu'un état d'urgence ou un état d'infraction.

L'urgence est typiquement une urgence sanitaire ou vitale, concernant un ou plusieurs êtres vivants tels que des êtres humains. L'urgence concerne ainsi par exemple un blessé ou une femme sur le point d'accoucher.

L'infraction peut être le vol du véhicule, une infraction du code de la route au moyen du véhicule, une prise d'otage au moyen du véhicule, etc.

Dans le cas d'un véhicule en état d'infraction, ce véhicule peut être signalé à des forces de sécurité (telles que la police ou la gendarmerie), mais la localisation de ce véhicule et l'estimation de sa trajectoire est souvent très compliquée. Il est ainsi difficile de guider intelligemment un véhicule des forces de sécurité vers un tel véhicule ou d'alerter les véhicules aux alentours de la présence du véhicule en état d'infraction.

En outre, dans le cas d'un véhicule en état d'urgence, il n'existe pas de solution fiable permettant de guider le plus rapidement possible un véhicule d'intérêt général prioritaire vers le véhicule en état d'urgence, afin que le véhicule d'intérêt général prioritaire ouvre la voie au véhicule en état d'urgence, notamment grâce à ses moyens d'alerte.

US 2017/364069 A1 décrit une méthode visant à adapter l'itinéraire d'un véhicule autonome après que ce dernier a détecté une urgence médicale d'un de ses occupants, afin qu'il se dirige vers un établissement de santé.

US 2016/210858 A1 décrit un serveur recevant une requête d'alerte d'un véhicule d'urgence et déterminant une zone d'alerte pour le véhicule d'urgence à partir de ses position et trajectoire. Le serveur détermine également une zone de véhicule pour des véhicules à partir de leurs positions et trajectoires. Le serveur sélectionne ensuite certains véhicules en comparant chaque zone de véhicule avec la zone d'alerte, et transmet une alerte aux véhicules sélectionnés pour les informer de l'approche du véhicule d'urgence.

US 2009/174572 A1 décrit un serveur identifiant une zone dans laquelle un véhicule d'urgence va probablement passer, à partir de sa position et de sa trajectoire probable. Le serveur détermine ensuite quels véhicules se trouvent dans cette zone, à partir de leurs positions, puis transmet une alerte à certains de ces véhicules, sur la présence, la position et la route du véhicule d'urgence.

### Exposé de l'invention

La présente invention concerne un procédé de gestion d'un état de crise d'un premier véhicule selon la revendication 1.

Le procédé selon l'invention permet d'alerter l'environnement du premier véhicule de son état de crise. Le message d'alerte indique audit au moins un élément de détection que le premier véhicule est en état d'urgence et est susceptible de se trouver dans la même zone géographique où il se trouve. En outre, le message d'alerte comprenant un élément d'identification du premier véhicule, permet la détection du premier véhicule par l'élément de détection. Ainsi, le message d'alerte envoyé audit au moins un élément de détection déclenche la détection du premier véhicule par ledit au moins élément de détection.

L'élément de détection ayant détecté le premier véhicule, adresse un message de localisation du premier véhicule comprenant au moins une hypothèse de trajectoire et/ou au moins une hypothèse de position future du premier véhicule.

Dans un mode de réalisation, la zone géographique est estimée en fonction de ladite au moins une hypothèse de trajectoire et/ou au moins une hypothèse de position future du premier véhicule reçues.

Le dispositif de gestion, ayant reçu le message de localisation en provenance de l'élément de détection, estime la zone géographique dans laquelle le premier véhicule (170) est susceptible d'être positionné pendant une période de temps donnée.

Dans un mode de réalisation, le procédé comprend les étapes suivantes :
- réception d'un signalement de l'état de crise du premier véhicule,
- estimation d'une première zone géographique dans laquelle le premier véhicule est susceptible d'être positionné pendant une période de temps donnée, et
- envoi d'un message d'alerte à au moins un élément de détection, positionné au niveau d'une voie de circulation, ledit au moins un élément de détection étant susceptible d'être positionné dans la première zone géographique pendant la période de temps donnée.

Le procédé selon l'invention permet d'alerter l'environnement du premier véhicule de son état de crise et ainsi d'adapter le trafic des véhicules aux alentours.

Dans un mode de réalisation particulier, l'état de crise est un état d'urgence ou un état d'infraction.

L'urgence est typiquement une urgence sanitaire ou vitale, concernant un ou plusieurs êtres vivants tels que des êtres humains. L'urgence concerne ainsi par exemple un blessé ou une femme sur le point d'accoucher.

L'infraction peut être le vol du premier véhicule, une infraction du code de la route au moyen du premier véhicule, une prise d'otage au moyen du premier véhicule, etc.

Dans un mode de réalisation particulier, dans lequel la durée de la période de temps est déterminée en fonction d'au moins un élément parmi les éléments suivants :
- une vitesse de déplacement potentielle du premier véhicule,
- un nombre d'alternatives de voies de circulation potentielles par unité de surface dans une zone autour du premier véhicule,
- un trafic estimé sur la trajectoire du premier véhicule.

Dans un mode de réalisation particulier, la période de temps est inférieure ou égale à trois minutes.

Dans un mode de réalisation particulier, le procédé comprend en outre une étape de réception d'un message de localisation du premier véhicule, comprenant au moins une hypothèse de trajectoire et/ou au moins une hypothèse de position future du premier véhicule, ledit message de localisation étant envoyé par un terminal associé audit au moins un élément de détection.

Le procédé selon l'invention permet ainsi de localiser avec précision le véhicule en état d'urgence.

Dans un mode de réalisation particulier, le procédé comprend en outre les étapes suivantes :
- détermination d'un véhicule intervenant en fonction de ladite au moins une hypothèse de trajectoire et/ou au moins une hypothèse de position future, le véhicule intervenant étant un véhicule pour lequel l'estimation d'une durée potentielle nécessaire audit véhicule pour rejoindre le premier véhicule est minimale, et
- envoi d'un message instruction d'intervention à un terminal associé au véhicule intervenant comprenant une instruction d'intervention.

Ainsi, le véhicule intervenant est déterminé en fonction de ladite au moins une hypothèse de trajectoire et/ou au moins une hypothèse de position future reçue en provenance dudit au moins un élément de détection.

Dans un mode de réalisation particulier, le véhicule intervenant est déterminé en fonction d'un élément de caractérisation dudit véhicule indiquant une capacité d'intervention dudit véhicule.

Dans un mode de réalisation particulier, le message d'instruction d'intervention comprend en outre un scénario de guidage du véhicule intervenant vers le premier véhicule, ledit scénario de guidage comprenant des instructions de guidage.

Dans un mode de réalisation particulier, le procédé comprend en outre les étapes suivantes :
- estimation d'une deuxième zone géographique associée audit véhicule intervenant, en fonction d'une position de géolocalisation du véhicule intervenant,
- détermination d'au moins un véhicule coopérant susceptible d'être positionné dans ladite deuxième zone géographique,
- envoi d'un message d'instruction de coopération à un terminal associé audit au moins un véhicule coopérant, comprenant une instruction d'action visant à faciliter la progression du véhicule intervenant vers le premier véhicule.

Dans un mode de réalisation particulier, le procédé comprend en outre les étapes suivantes :
- détermination d'au moins un élément collaborateur susceptible d'être positionné devant le premier véhicule, en fonction de ladite au moins une hypothèse de trajectoire et/ou au moins une hypothèse de position future,
- envoi d'un message d'instruction de collaboration à un terminal associé audit au moins un élément collaborateur, comprenant une instruction d'action à faciliter ou entraver la progression du premier véhicule, de sorte à diminuer la durée nécessaire au véhicule intervenant pour rejoindre le premier véhicule.

Ainsi, l'élément collaborateur est déterminé en fonction de ladite au moins une hypothèse de trajectoire et/ou au moins une hypothèse de position future reçue en provenance dudit au moins un élément de détection.

Dans un mode de réalisation particulier :
- l'instruction d'action du message d'instruction de coopération et/ou du message d'instruction de collaboration est associée à un instant de départ de l'action et/ou une durée prévisionnelle de l'action, et
- l'instruction d'action du message d'instruction de coopération et/ou du message d'instruction de collaboration porte sur la modification d'un paramètre de conduite. L'invention concerne de plus un dispositif de gestion d'un état de crise d'un premier véhicule selon la revendication 9.

Dans un mode de réalisation particulier, le dispositif de gestion est un serveur distant ou un terminal associé à un élément de voie de circulation.

Dans un mode particulier de réalisation, les différentes étapes du procédé de gestion selon l'invention sont déterminées par des instructions de programmes d'ordinateurs. En conséquence, l'invention vise aussi un programme d'ordinateur, sur un support d'informations, ce programme comportant des instructions adaptées à la mise en œuvre des étapes d'un procédé de gestion selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
La figure 1 représente, de manière schématique, un système de gestion apte à mettre en œuvre un procédé de gestion selon un exemple de mode de réalisation de l'invention ;
La figure 2 représente, de manière schématique, un serveur distant du système de gestion de la figure 1 ;
La figure 3 représente, sous forme d'organigramme, les principales étapes d'un procédé de gestion selon un exemple de mode de réalisation de l'invention.

### Description des modes de réalisation

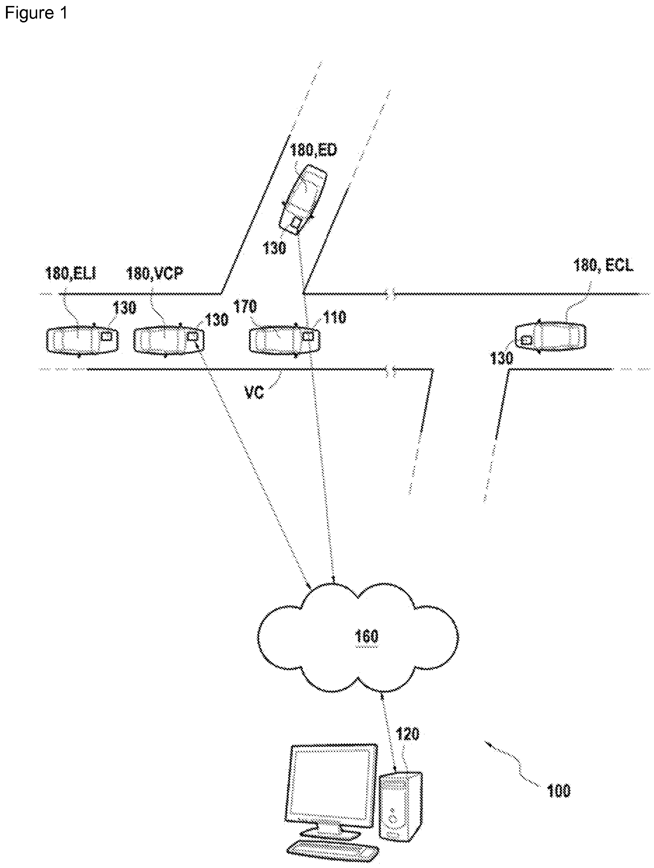

La figure 1 représente, de manière schématique, un système 100 de gestion apte à mettre en œuvre un procédé de gestion d'un état de crise d'un premier véhicule, selon un exemple de mode de réalisation de l'invention.

Le système comprend une pluralité de modules dont un module de réception, un module d'estimation et un module d'envoi.

Le système 100 peut comprendre un premier terminal 110 et/ou un serveur distant 120, et au moins un autre terminal dit deuxième terminal 130. Le système 100 peut en outre comprendre un serveur de service de gestion de crise (non représenté).

De plus, le système 100 peut comporter un ou plusieurs autres serveurs distants, par exemple dédiés au stockage de longue durée (non représentés).

Le premier terminal 110, le serveur distant 120, chaque deuxième terminal 130 et/ou le serveur de service de gestion d'urgence peuvent être connectés à un réseau de télécommunications 160 afin de communiquer entre eux. Aucune limitation n'est attachée à la nature du réseau de télécommunications. Il peut s'agir par exemple d'un réseau Wifi, ou d'un réseau de téléphonie mobile (de type 3G, 4G, 5G etc.).

De plus, les protocoles de télécommunications utilisés peuvent être variés. Les protocoles utilisés sont par exemple les protocoles BTP/GeoNet/UDP/IP (pour « Basic Transport Protocol/GeoNet/User Datagram Protocol/Internet Protocol », en terminologie anglo-saxonne), en cellulaire 4G ou 5G, ou MQTT/TCP/IP (Message Queuing Telemetry Transport/Transmission Control Protocol/Internet Protocol), aussi en cellulaire.

Le premier terminal 110 peut être un terminal mobile tel qu'un téléphone portable, par exemple de type « smartphone », une tablette numérique, ou un ordinateur personnel.

Le premier terminal 110 est associé au premier véhicule 170. Le premier véhicule 170 est par exemple positionné au niveau d'une voie de circulation VC. Le premier véhicule 170 peut par exemple circuler sur la voie de circulation VC.

Le premier terminal 110 peut ainsi être positionné au niveau du premier véhicule 170, typiquement à l'intérieur du premier véhicule 170, ou incorporé dans le premier véhicule 170 c'est-à-dire faisant partie des systèmes embarqués du véhicule 170.

Chaque deuxième terminal 130 peut être un terminal mobile tel qu'un téléphone portable, par exemple de type « smartphone », une tablette numérique, ou un ordinateur personnel.

En outre, chaque deuxième terminal 130 peut être associé à un élément 180 de voie de circulation, cet élément 180 étant typiquement un élément mobile tel qu'un véhicule ou un être vivant, ou un élément fixe, tel qu'un panneau d'affichage, un radar ou une caméra.

Chaque élément 180 de voie de circulation est par exemple positionné au niveau d'une voie de circulation VC, pouvant être différente de la voie de circulation VC du premier véhicule 170. Lorsque l'élément 180 est mobile, il circule par exemple sur la voie de circulation VC ou à côté (typiquement lorsque le premier élément mobile est un être vivant). Lorsque l'élément 180 est fixe, il peut être positionné au niveau de la voie de circulation VC, typiquement à côté ou au-dessus.

Chaque deuxième terminal 130 peut ainsi être positionné au niveau d'un véhicule 180, typiquement à l'intérieur du véhicule 180, ou incorporé dans le véhicule 180 c'est-à-dire faisant partie des systèmes embarqués du véhicule 180.

Chaque véhicule 170, 180 peut prendre la forme d'un véhicule motorisé tel qu'une voiture automobile, une camionnette, un camion, un autobus ou un deux-roues, d'une bicyclette, d'un train, d'un tramway ou encore d'un bateau ou d'un avion. Aussi, la ou les voies de circulation VC mentionnées dans ce document peuvent être terrestres, maritimes ou aériennes. De plus, chaque véhicule 170, 180 peut être un véhicule autonome.

Le serveur de service de gestion de crise est un serveur lié à un service de gestion de crise, ce service proposant typiquement aux utilisateurs de ce service de signaler un état de crise d'un véhicule.

Le serveur distant 120 est un serveur apte à stocker une pluralité d'éléments d'information décrits ci-après, concernant le premier véhicule 170 et chaque élément 180 de voie de circulation. Le serveur distant 120 est ainsi apte à utiliser ces éléments d'information afin de gérer à distance l'état de crise d'un véhicule tel que le premier véhicule 170.

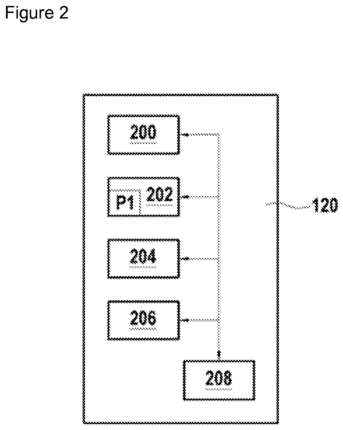

Comme le montre la figure 2, le serveur distant 120 présente l'architecture conventionnelle d'un ordinateur. Le serveur distant 120 comporte notamment un processeur 200, une mémoire morte 202 (de type « ROM »), une mémoire non volatile réinscriptible 204 (de type « EEPROM » ou « Flash NAND » par exemple), une mémoire volatile réinscriptible 206 (de type « RAM »), et une interface de communication 208.

La mémoire morte 202 du serveur distant 120 constitue un support d'enregistrement conforme à un exemple de mode de réalisation de l'invention, lisible par le processeur 200 et sur lequel est enregistré un programme d'ordinateur P1 conforme à un exemple de mode de réalisation de l'invention. En variante, le programme d'ordinateur P1 est stocké dans la mémoire non volatile réinscriptible 204.

Le programme d'ordinateur P1 peut permettre au serveur distant 120 de mettre en œuvre au moins une partie du procédé de gestion conforme à un exemple de mode de réalisation de l'invention.

Ce programme d'ordinateur P1 peut ainsi définir des modules fonctionnels et logiciels du serveur distant 120, configurés pour mettre en œuvre les étapes d'un procédé de gestion conforme à un exemple de mode de réalisation de l'invention, ou au moins une partie de ces étapes. Ces modules fonctionnels s'appuient sur ou commandent les éléments matériels 200, 202, 204, 206 et 208 de la plateforme 110 cités précédemment. Ils peuvent comprendre notamment ici le module de réception, le module d'estimation et le module d'envoi du système 100.

Le premier terminal 110, chaque deuxième terminal 130, et/ou le serveur de service de gestion d'urgence peuvent aussi présenter l'architecture conventionnelle d'un ordinateur, et peuvent chacun alors comporter notamment un processeur, une mémoire morte (de type « ROM »), une mémoire non volatile réinscriptible (de type « EEPROM » ou « Flash NAND » par exemple), une mémoire volatile réinscriptible (de type « RAM »), et une interface de communication.

Chaque mémoire morte peut constituer un support d'enregistrement conforme à un exemple de mode de réalisation de l'invention, lisible par le processeur associé et sur lequel est enregistré un programme d'ordinateur conforme à un exemple de mode de réalisation de l'invention. En variante, le programme d'ordinateur est stocké dans la mémoire non volatile réinscriptible associée. Le programme d'ordinateur peut permettre la mise en œuvre d'au moins une partie du procédé de gestion conforme à un exemple de mode de réalisation de l'invention.

Chaque programme d'ordinateur peut ainsi définir des modules fonctionnels et logiciels configurés pour mettre en œuvre les étapes d'un procédé de gestion conforme à un exemple de mode de réalisation de l'invention, ou au moins une partie de ces étapes. Ces modules fonctionnels s'appuient sur ou commandent les éléments matériels cités précédemment et peuvent comprendre notamment le module de réception, le module d'estimation et le module d'envoi du système 100.

En outre, chaque deuxième terminal 130 peut comprendre une caméra embarquée, un radar, un microphone, un scanner laser et/ou un moyen de guidage GPS ou Galileo.

En variante le chaque élément 180 de voie de circulation peut comprendre une caméra embarquée, un radar, un microphone et/ou un moyen de guidage GPS ou Galileo, auxquels le deuxième terminal 130 peut accéder.

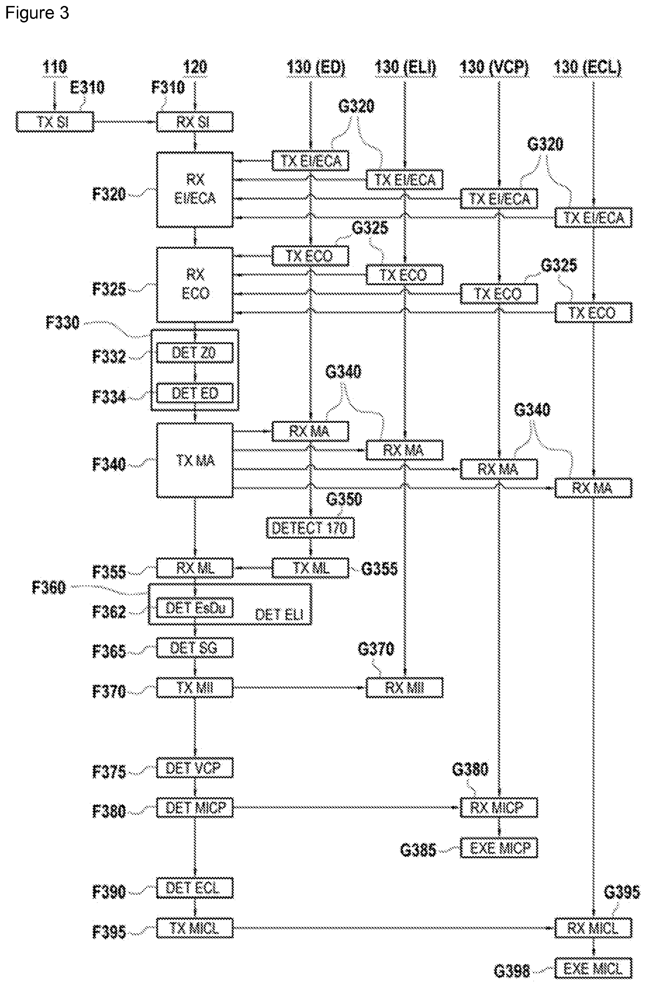

La figure 3 représente un procédé 300 de gestion d'un état de crise d'un premier véhicule, selon un exemple de mode de réalisation de l'invention.

Le procédé peut être mis en œuvre par le système 100 de gestion décrit en référence aux figures 1 et 2. Le premier véhicule 170 en état de crise est alors le premier véhicule 170 décrit en référence à la figure 1.

Dans une étape E310, un signalement SI de l'état de crise du premier véhicule 170 est transmis. Le signalement SI est typiquement transmis sous forme de message et via le réseau de télécommunications 160. De plus, le signalement SI est typiquement reçu par le serveur distant 120 (étape F310).

L'état de crise peut être un état d'urgence ou un état d'infraction.

L'urgence est typiquement une urgence sanitaire ou vitale, concernant un ou plusieurs êtres vivants tels que des êtres humains. L'urgence concerne ainsi par exemple un blessé ou une femme sur le point d'accoucher.

Le premier véhicule 170 peut alors transporter un ou plusieurs êtres vivants en situation d'urgence vers un lieu de prise en charge de l'urgence tel qu'un centre de soins, ou se diriger vers un lieu où un ou plusieurs êtres vivants sont en situation d'urgence, tel qu'un lieu au niveau duquel s'est produit un accident.

L'infraction peut être le vol du premier véhicule 170, une infraction du code de la route au moyen du premier véhicule 170, une prise d'otage au moyen du premier véhicule 170, etc. La destination du premier véhicule 170 n'est alors généralement pas connue.

Le signalement SI peut comprendre au moins un élément d'identification du premier véhicule 170, et/ou au moins un élément de caractérisation du premier véhicule 170, sous forme de données numériques.

L'élément d'identification est typiquement le numéro de plaque d'immatriculation du premier véhicule 170, ou le numéro MSISDN (acronyme de « Mobile Station Integrated Services Digital Network » en terminologie anglo-saxonne) du premier terminal 110 associé au premier véhicule 170. En outre, chaque élément de caractérisation peut indiquer :
- la catégorie à laquelle appartient le premier véhicule 170, c'est-à-dire indiquer si le premier véhicule 170 est une voiture automobile, un camion, un autobus, un deux-roues, une bicyclette, un train, un tramway, un bateau, un avion etc.,
- une sous-catégorie de la catégorie à laquelle le premier véhicule 170 appartient. Par exemple, cette information peut porter sur le type de véhicule, la marque du véhicule, le modèle du véhicule, la couleur du véhicule, etc.,
- le nombre et/ou le type de personne à bord du premier véhicule 170,
- la capacité du premier véhicule 170 à communiquer ou non avec le serveur distant 120.

En outre, le signalement SI peut comprendre sous forme de données numériques un élément d'information concernant le type d'état de crise du premier véhicule 170 (état d'urgence ou état d'infraction), et concernant éventuellement le sous-type d'état (accident de la route, accouchement imminent, personne inconsciente, fracture, brûlure, vol, prise d'otage, infraction du code de la route, etc.).

De plus, le signalement SI peut comprendre sous forme de données numériques un élément d'information concernant le point de départ dit confirmé du premier véhicule 170, un élément d'information concernant le point d'arrivée dit confirmé du premier véhicule 170, et/ou un élément d'information concernant un ou plusieurs itinéraires potentiels du premier véhicule 170, chaque itinéraire pouvant être divisé en une pluralité de trajectoires potentielles. Le point d'arrivée et l'itinéraire ne sont toutefois généralement pas renseignés lorsque l'état de crise est un état d'infraction.

Le terme « confirmé » est employé ici pour désigner un point de départ, un point d'arrivée ou un itinéraire connu du premier véhicule 170. Le terme « potentiel » est employé pour désigner un point de départ, un point d'arrivée ou un itinéraire inconnu ou incertain du premier véhicule 170, mais pouvant respectivement être le point de départ, le point d'arrivée ou l'itinéraire du premier véhicule 170.

En outre, le signalement SI peut comprendre sous forme de données numériques un horodatage, l'horodatage indiquant typiquement la date et l'heure (minutes et/ou secondes comprises) correspondant à l'identification de l'état de crise du premier véhicule 170.

En variante, le signalement SI peut comprendre une photographie numérique, un son numérique et/ou une vidéo numérique à partir desquels le ou les éléments d'identification et/ou de caractérisation peuvent être extraits par le serveur distant 120. Une photographie du premier véhicule 170 peut ainsi être transmise, le serveur distant 120 pouvant par exemple déterminer par analyse d'image la plaque d'immatriculation du premier véhicule 170, la catégorie du premier véhicule 170, la couleur du premier véhicule 170, etc.

Lorsque l'état de crise est un état d'urgence, le signalement SI de l'état de crise est typiquement transmis par le premier terminal 110 associé au premier véhicule 170. En variante, le signalement SI peut être transmis par un témoin extérieur au premier véhicule 170, au moyen d'un autre terminal dit terminal tiers.

Lorsque l'état de crise est un état d'infraction, le signalement SI de l'état de crise est typiquement transmis par un témoin de l'infraction extérieur au premier véhicule 170 (ou le propriétaire du premier véhicule 170 en cas de vol), au moyen d'un terminal tiers.

La transmission du signalement SI peut être déclenchée par une validation d'un utilisateur au niveau du premier terminal 110 ou du terminal tiers. En variante, la transmission du signalement SI peut être déclenchée automatiquement.

Chaque élément d'identification ou de caractérisation du premier signalement SI peut avoir été pré-indiqué, par exemple lors d'une inscription de l'utilisateur au service de gestion de crise, ou indiqué par l'utilisateur juste avant le déclenchement de l'envoi, par exemple via une application informatique ou un site Internet.

En outre, chaque éventuel élément d'information concernant le type ou le sous-type d'état de crise, le point de départ confirmé, le point d'arrivée confirmé, et/ou le ou les itinéraires potentiels du premier véhicule 170 peut être indiqué par l'utilisateur juste avant le déclenchement de l'envoi, ou obtenu depuis un moyen de guidage GPS ou Galileo.

Le premier signalement SI de l'état d'urgence peut aussi prendre la forme d'un appel téléphonique à un service de gestion de crise, afin de permettre le premier signalement SI dans une majorité de cas, même par un témoin extérieur au premier véhicule 170, au moyen d'un terminal tiers.

Suite à l'étape E310, le serveur distant 120 enregistre les éléments reçus dans le signalement SI afin de les stocker. Le serveur distant 120 est alors apte à transmettre ces éléments à des terminaux dans des étapes ultérieures. Le serveur distant 120 peut éventuellement envoyer un message au premier terminal 170 ou le terminal tiers afin de demander des précisions sur le signalement.

Lorsque le premier véhicule 170 comprend un dispositif traceur GPS, des données de géolocalisation peuvent être automatiquement fournies par ce dernier et envoyées au serveur distant 120, par exemple selon la norme ETSI EN 302 636.

Dans une étape G320 dite préliminaire pouvant être mise en œuvre avant, pendant et/ou après l'étape E310, un ou plusieurs deuxièmes terminaux 130 associés à des éléments 180 de voie de circulation peuvent envoyer un ou plusieurs éléments d'identification EI et/ou un ou plusieurs éléments de caractérisation ECA. Chaque élément d'identification EI et/ou élément de caractérisation ECA est envoyé par un deuxième terminal 130 donné au serveur distant 120 via le réseau de télécommunications 160, et concerne l'élément 180 associé audit deuxième terminal 130.

En variante, le ou les éléments d'identification EI et/ou le ou les éléments de caractérisation ECA concernant un ou plusieurs éléments 180 de voie de circulation sont envoyés par des terminaux différents des deuxièmes terminaux 130 associés à ces éléments 180. Chaque élément d'identification EI / de caractérisation ECA peut alors typiquement être préalablement détecté par le terminal envoyant cet élément, par exemple par analyse d'image ou de signal électromagnétique.

Chaque élément d'identification EI envoyé par un élément de voie de circulation est typiquement le numéro MSISDN du deuxième terminal 130 associé à l'élément 180 de voie de circulation. En variante, l'élément d'identification EI peut être le numéro de plaque de l'élément de voie de circulation.

En outre, chaque élément de caractérisation ECA d'un élément 180 de voie de circulation peut indiquer :
- la catégorie à laquelle appartient l'élément 180 de voie de circulation, c'est-à-dire indiquer si élément 180 est fixe ou mobile, ou plus précisément si l'élément 180 est une voiture automobile, un camion, un autobus, un deux-roues, une bicyclette, un train, un tramway, un bateau, un avion, un être humain, un animal un panneau d'affichage, un radar, une caméra de surveillance, etc.,
- une sous-catégorie de la catégorie générale à laquelle l'élément 180 de voie de circulation appartient. Par exemple, si l'élément 180 est un véhicule, cette information peut porter sur le type de véhicule, la marque du véhicule, le modèle du véhicule, la couleur du véhicule, etc.,

- le degré d'autonomie de l'élément 180 de voie de circulation, et
- une capacité d'intervention.

La catégorie et la sous-catégorie peuvent être envoyées dans un message de type CAM (pour « Cooperative Awareness Message », en terminologie anglo-saxonne), défini dans la norme ETSI EN 302 637-2, ou un autre type de message défini par une autre norme de télécommunications.

Le degré d'autonomie désigne ici la capacité de l'élément 180 à suivre et/ou répondre à une instruction telle qu'une instruction envoyée aux étapes F380 et/ou F395 décrites ci-après. Par exemple, un véhicule entièrement autonome peut automatiquement prendre en compte l'instruction et ainsi réaliser la manœuvre associée, un véhicule disposant d'une assistance à la conduite peut nécessiter un acquittement de la part du conducteur, et un véhicule ne disposant pas d'assistance à la conduite ne répond pas aux instructions.

La capacité d'intervention peut être un élément de caractérisation d'un élément 180 lorsque cet élément 180 est un véhicule. La capacité d'intervention indique si le véhicule peut être déterminé comme étant un véhicule intervenant à l'étape F360 décrite ci-après. Cela est typiquement le cas lorsque le véhicule est un véhicule d'intérêt général prioritaire, et ainsi un véhicule accrédité pour intervenir en situation de crise ou un véhicule disposant de moyens d'alerte tels qu'une sirène ou un gyrophare pour pouvoir intervenir en situation de crise.

Chaque élément d'identification EI ou de caractérisation ECA d'un élément 180 de voie de circulation est typiquement envoyé par le deuxième terminal 130 associé à l'élément 180 lors d'une inscription du deuxième terminal 130 associé à l'élément 180 au service de gestion d'urgence ou lors d'une immatriculation de l'élément 180 de voie de circulation.

En variante, chaque élément d'identification EI ou de caractérisation ECA peut être envoyé par le deuxième terminal 130 associé à l'élément 180 lors d'un appareillage du deuxième terminal 130 associé à l'élément 180 de voie de circulation, ou lors d'un début de trajet.

Le deuxième terminal 130 associé à l'élément 180 de voie de circulation peut alors conserver tout ou partie des données, et les envoyer au serveur distant 120 après avoir été authentifié auprès du serveur distant 120, ce qui permet de préserver l'anonymat des données lorsque le procédé n'est pas mis en œuvre. En variante, afin d'éviter un volume de transfert de données trop important, le deuxième terminal 130 associé à l'élément 180 de voie de circulation peut envoyer un lien vers un espace de stockage d'un autre serveur distant, typiquement après authentification du deuxième terminal 130 auprès du serveur distant 120 et éventuellement auprès de l'autre serveur distant.

Bien entendu, l'envoi d'un ou plusieurs éléments d'identification EI ou de caractérisation ECA peut être réitéré une ou plusieurs fois afin de mettre à jour ce ou ces éléments dans le serveur distant 120.

Le serveur distant 120 reçoit le ou les éléments d'identification EI ou de caractérisation ECA dans une étape F320, puis les enregistre afin de la stocker, typiquement de manière sécurisée, après les avoir éventuellement certifiés.

En outre, un ou plusieurs deuxième terminaux 130 associés à des éléments 180 de voie de circulation peuvent envoyer, par exemple de manière périodique, un ou plusieurs éléments contextuels ECO, typiquement au serveur distant 120 via le réseau de télécommunications 160 (étape G325). Chaque élément contextuel ECO envoyé par un deuxième terminal 130 concerne l'élément 180 de voie de circulation associé à ce deuxième terminal 130.

En variante, le ou les éléments contextuels ECO concernant un élément 180 de voie de circulation peuvent être envoyés par un terminal différent du deuxième terminal 130 associé à cet élément 180 de voie de circulation. Chaque élément contextuel ECO peut alors être préalablement détecté par le terminal envoyant cet élément contextuel ECO, par exemple par analyse d'image ou de signal électromagnétique.

Chaque élément contextuel ECO envoyé peut être :
- une position de géolocalisation de l'élément 180 de voie de circulation,
- un itinéraire prévisionnel de l'élément 180 de voie de circulation, l'itinéraire pouvant être divisé en une pluralité de trajectoires prévisionnelles,
- la vitesse de l'élément 180 de voie de circulation,
- une information liée au trafic aux alentours de la position de géolocalisation de l'élément 180 de voie de circulation, etc.

Le ou les éléments contextuels ECO peuvent être envoyés dans un message de type CAM (pour « Cooperative Awareness Message », en terminologie anglo-saxonne), défini dans la norme ETSI EN 302 637-2, ou un autre type de message défini par une autre norme de télécommunications.

Le serveur distant 120 reçoit le ou les éléments contextuels ECO dans une étape F325, puis les enregistre afin de la stocker, typiquement de manière sécurisée, après les avoir éventuellement certifiés.

L'envoi d'un ou plusieurs éléments contextuels ECO peut être réitéré une ou plusieurs fois afin de mettre à jour ce ou ces éléments contextuels ECO dans le serveur distant 120. Cette réitération peut être périodique.

Dans une étape F330, le serveur distant 120 détermine au moins un élément dit de détection ED parmi les éléments 180 de voie de circulation pour lesquels un ou plusieurs éléments d'identification EI, de caractérisation ECA et/ou contextuel ECO ont été envoyés aux étapes G320 et G325, chaque élément de détection ED étant susceptible de détecter le premier véhicule 170.

Dans une sous étape F332, le serveur distant 120 estime une première zone géographique ZO dans laquelle le premier véhicule 170 est susceptible d'être positionné pendant une période de temps donnée.

Par « susceptible d'être positionné », on entend que la probabilité que le premier véhicule 170 soit positionné dans la première zone géographique ZO est forte et par exemple quasiment certaine, par exemple supérieure à 40% et préférentiellement supérieure à 70%.

La période de temps débute par exemple à la date et l'heure de l'horodatage reçu à l'étape F310, et la durée de la période de temps est typiquement de quelques minutes, et est par exemple inférieure ou égale à deux minutes. En effet, au-delà de ces quelques minutes, l'incertitude concernant la localisation du premier véhicule 170 est trop grande pour que la probabilité qu'un élément 180 de voie de circulation puisse détecter le premier véhicule 170 soit significative. La période de temps est typiquement déterminée en fonction du seuil de probabilité choisi concernant la présence du premier véhicule 170 dans la première zone géographique ZO.

La durée de la période de temps est typiquement déterminée en fonction d'une vitesse de déplacement potentielle du premier véhicule 170 et du nombre d'alternatives de voies de circulation potentielles par unité de surface dans la zone autour du premier véhicule 170 (le premier véhicule 170 peut changer de voie tous les 20 kilomètres sur une autoroute, et tous les 100 mètres en ville, l'incertitude sur sa trajectoire étant ainsi plus élevée dans le second cas).

La durée de la période de temps peut en outre être déterminée en fonction du trafic sur la trajectoire du premier véhicule 170, et/ou d'une hypothèse de trajectoire du premier véhicule 170, par exemple déterminée à l'étape G350.

La première zone géographique ZO est typiquement estimée en fonction d'au moins un itinéraire potentiel du premier véhicule 170, chaque itinéraire potentiel pouvant être divisé en une pluralité de trajectoires potentielles.

Une liste d'itinéraires potentiels comprenant au moins un itinéraire potentiel du premier véhicule 170 peut ainsi être déterminée, typiquement par le serveur distant 120.

Lorsque le signalement SI reçu à l'étape F310 comprend l'élément d'information concernant le ou les itinéraires potentiels du premier véhicule 170, chaque itinéraire potentiel indiqué par cet élément d'information est ajouté à la liste d'itinéraires potentiels.

Lorsque le signalement SI reçu à l'étape F310 comprend l'élément d'information concernant le point de départ confirmé du premier véhicule 170 et l'élément d'information concernant le point d'arrivée confirmé du premier véhicule 170, le serveur distant 120 détermine un ou plusieurs itinéraires potentiels en fonction de ces éléments d'information concernant les points de départ et d'arrivée confirmés, puis ajoute ce ou ces itinéraires potentiels à la liste d'itinéraires potentiels. Par exemple, un seul itinéraire optimum peut être déterminé.

Lorsque le signalement SI reçu à l'étape F310 ne comprend pas d'élément d'information concernant le point de départ confirmé du premier véhicule 170, un ou plusieurs points de départ potentiels du premier véhicule 170 peuvent être déterminés par le serveur distant 120.

De même, lorsque le signalement reçu à l'étape F310 ne comprend pas d'élément d'information concernant le point d'arrivée confirmé du premier véhicule 170, un ou plusieurs points d'arrivée potentiels du premier véhicule 170 peuvent alors être déterminés par le serveur distant 120.

Un ou plusieurs itinéraires potentiels peuvent être déterminés par le serveur distant 120 à partir de chaque couple de point de départ potentiel et de point d'arrivée potentiel, de chaque couple de point de départ confirmé et de point d'arrivée potentiel, et/ou chaque couple de point de départ potentiel et de point d'arrivée confirmé, chaque itinéraire potentiel étant alors ajouté à la liste d'itinéraires potentiels.

Lorsque le signalement SI reçu à l'étape F310 ne comprend pas d'élément d'information concernant le point de départ confirmé du premier véhicule 170 (le point de départ du premier véhicule 170 n'étant pas connu), une zone de départ du premier véhicule 170 peut être déterminée.

Par exemple, lorsque le signalement SI de l'état d'urgence prend la forme d'un message, le terminal ayant envoyé le message peut être localisé à partir de cet envoi afin de déterminer la zone de départ. De plus, lorsque le signalement SI de l'état d'urgence prend la forme d'un appel téléphonique, l'appel téléphonique peut être localisé afin de déterminer la zone de départ.

La détermination d'une zone de départ est typiquement suivie d'une détermination d'un ou plusieurs points de départ potentiels dans la zone de départ, puis d'une détermination, pour chaque point de départ potentiel déterminé, d'un ou plusieurs itinéraires potentiels à partir dudit point de départ potentiel, chaque itinéraire potentiel étant alors ajouté à la liste d'itinéraires potentiels.

Lorsque l'état de crise est un état d'urgence et lorsque le signalement SI comprend l'élément d'information concernant un point de départ confirmé et l'élément d'information concernant le sous-type d'état d'urgence du premier véhicule 170, un ou plusieurs points d'arrivée potentiels peuvent être déterminés en fonction de l'élément d'information concernant le point de départ confirmé et de l'élément d'information concernant le sous-type d'état d'urgence.

Le serveur distant 120 peut alors déterminer un ou plusieurs points d'arrivée potentiels correspondants aux lieux de prise en charge de l'urgence les plus proches du point de départ confirmé.

En effet, dans certaines situations d'urgence telles qu'un départ vers une maternité, l'utilisateur du premier terminal 110 peut être incapable d'indiquer les coordonnées de la maternité. De plus, après un accident de la route, l'utilisateur du premier terminal 110 peut ne pas connaître la localisation de l'hôpital le plus proche.

Ensuite, pour chaque point d'arrivé potentiel déterminé, un ou plusieurs itinéraires potentiels peuvent être déterminés à partir du point de départ confirmé et dudit point d'arrivée potentiel déterminé, chaque itinéraire potentiel étant alors ajouté à la liste d'itinéraires potentiels.

La première zone géographique ZO est typiquement estimée de sorte à comprendre une ou plusieurs portions successives de chaque itinéraire potentiel de la liste d'itinéraires potentiels, susceptibles d'être suivies par le premier véhicule 170 pendant la période de temps donnée. La première zone géographique ZO est ainsi élargie lorsque le point de départ ou le point d'arrivée du premier véhicule 170 n'est pas connu. De plus, la surface de la première zone ZO dépend de la durée de la période de temps donnée, cette période de temps étant elle-même déterminée par la vitesse du premier véhicule 170, du trafic sur sa trajectoire, etc.

En variante, lorsque le signalement SI reçu à l'étape F310 ne comprend pas d'élément d'information concernant le point de départ confirmé du premier véhicule 170, pas d'élément d'information concernant le point d'arrivée confirmé du premier véhicule 170 et pas d'élément d'information concernant le ou les itinéraires potentiels du premier véhicule 170 (ce qui est généralement le cas lorsque l'état de crise du premier véhicule 170 est un état d'infraction), la première zone géographique ZO est typiquement estimée en fonction d'une zone de départ, de la vitesse potentielle du premier véhicule 170 et/ou de l'horodatage.

Dans une sous étape F334, le serveur distant 120 détermine le ou les éléments de détection ED susceptibles d'être positionnés dans la première zone géographique ZO pendant la période de temps donnée, en fonction du ou des éléments d'identification EI, de caractérisation ECA et/ou contextuel ECO envoyés aux étapes G320 et G325.

Dans une étape F340, le serveur distant 120 envoie, via le réseau de télécommunications 160, un message d'alerte MA à au moins un des éléments de détection ED déterminés à l'étape F330, par exemple chaque élément de détection ED déterminé à l'étape F330. Chaque message d'alerte MA envoyé à un élément de détection ED est typiquement reçu, dans une étape G340, par le deuxième terminal 130 associé audit élément de détection ED.

Un message d'alerte MA envoyé à un élément de détection ED donné indique typiquement que le premier véhicule 170 est en état de crise, et indique en outre que le premier véhicule 170 est susceptible d'être positionné dans la première zone géographique ZO pendant la période de temps donnée.

Aussi, le message d'alerte MA peut comprendre l'élément d'identification du premier véhicule 170, un ou plusieurs éléments de caractérisation du premier véhicule 170, l'élément d'information concernant le type ou le sous-type de crise, etc.

Les étapes F330 et F340 peuvent être réitérées une ou plusieurs fois, typiquement de manière périodique.

Ainsi, seuls les éléments 180 susceptibles de détecter le premier véhicule 170 et/ou dont la circulation risque d'être impactée par le premier véhicule 170 sont alertés.

Dans une étape G350, au moins un élément de détection ED détecte le premier véhicule 170. L'élément de détection ED envoie alors, via le réseau de télécommunications 160 (étape G355), un message de localisation ML du premier véhicule 170, typiquement au serveur distant 120, qui le reçoit dans une étape F355.

Les étapes G350 et G355 sont typiquement mises en œuvre par le deuxième terminal 130 associé à l'élément de détection ED.

Le message de localisation ML comprend typiquement un élément d'information de localisation du premier véhicule 170, et éventuellement un ou plusieurs éléments d'identification EI, de caractérisation ECA et/ou contextuel ECO du premier véhicule 170.

Plus précisément, lors de l'étape G350 de détection, la position de géolocalisation et éventuellement un élément d'identification du premier véhicule 170 (typiquement numéro de plaque d'immatriculation) peuvent être obtenus.

De plus, au moins un élément de caractérisation (typiquement la catégorie, et une sous-catégorie) et/ou contextuels du premier véhicule 170 peuvent être obtenus lors de l'étape G350 de détection.

Par exemple, le deuxième terminal 130 associé à l'élément de détection ED analyse une ou plusieurs images obtenues par une caméra embarquée du deuxième terminal 130 afin de détecter et d'identifier le premier véhicule 170, ou analyse un signal électromagnétique envoyé au moyen du radar du deuxième terminal 130 ou de l'élément de détection ED, réfléchi par le premier véhicule 170, puis reçu par le radar.

Le deuxième terminal 130 compare ensuite les données obtenues aux éléments d'identification et/ou de caractérisation du premier véhicule 170 reçues à l'étape G340, afin de déterminer la présence du premier véhicule 170.

En variante ou en complément, le deuxième terminal 130 associé à l'élément de détection ED détecte la mise en œuvre, par un élément coopérant et/ou un élément collaborateur, d'au moins une instruction telle qu'envoyée à l'étape F380 et/ou F395 décrite ci-après, et en déduit une probabilité de présence du premier véhicule 170.

La détection peut être facilitée par des signaux d'alerte émis par le premier véhicule 170 et détectés par l'élément de détection ED. Les signaux d'alerte sont par exemple émis par une sirène, un gyrophare ou des phares (appel de phare, feux de détresse allumés). Le deuxième terminal 130 ayant détecté ces signaux de détresse et étant informé qu'il est susceptible de détecter le premier véhicule 170 grâce au message d'alerte reçu à l'étape G340, il peut déduire une probabilité de présence du premier véhicule 170.

Le deuxième terminal 130 peut aussi déterminer, lors de l'étape G350 de détection, au moins une hypothèse de trajectoire du premier véhicule 110, éventuellement associée à une durée donnée (étant typiquement de quelques minutes, par exemple de deux minutes). Des hypothèses de positions futures du premier véhicule 110 peuvent en outre être déterminées à cette étape G350.

Le message de localisation ML du premier véhicule 170 envoyé par l'élément de détection ED (étape G355) comprend alors typiquement chaque hypothèse de trajectoire et/ou de position futures déterminées à l'étape G350.

Le deuxième terminal 130 détermine typiquement chaque hypothèse de trajectoire en fonction du ou des éléments contextuels du premier véhicule 170, précédemment obtenus lors de la mise en œuvre de l'étape G350 de détection.

Plus précisément, chaque hypothèse de trajectoire peut être déterminée à partir de la position de géolocalisation du premier véhicule 170 et du sens de circulation du premier véhicule 170 obtenus, ainsi que de la configuration du réseau de voie de circulation à proximité de la position de géolocalisation du premier véhicule 170. Il est ainsi déterminé quelles voies de circulation peuvent être empruntées par le premier véhicule 170 étant donné sa position de géolocalisation et son sens de circulation, une hypothèse de trajectoire correspondant à une voie susceptible d'être empruntée par le premier véhicule 170.

L'hypothèse de trajectoire peut correspondre à une trajectoire potentielle d'un itinéraire potentiel du premier véhicule 170, ou correspondre à une nouvelle trajectoire dans le cas où le premier véhicule 170 ne suit pas le ou les itinéraires potentiels de la liste déterminée à l'étape F332.

Lorsque le deuxième terminal 130 connaît le point d'arrivée confirmé du premier véhicule 170, les hypothèses de trajectoire sont limitées à celles pouvant mener au point d'arrivée confirmé.

Un taux de probabilité peut être associé à chaque hypothèse de trajectoire déterminée, afin de pouvoir classer les hypothèses de trajectoire.

Par exemple, lorsque le point d'arrivée confirmé du premier véhicule 170 n'est pas connu du deuxième terminal 130, le taux de probabilité le plus élevé peut être associé à l'hypothèse concernant une poursuite rectiligne de la trajectoire, le taux de probabilité concernant d'éventuelles autres hypothèses de changement de voie étant plus faible.

Dans un autre exemple, lorsque le point d'arrivée confirmé du premier véhicule 170 est connu du deuxième terminal 130, le taux de probabilité le plus élevé peut être associé à une hypothèse de trajectoire concernant l'itinéraire potentiel le plus court en durée ou encore en distance. Un historique récent des choix de conduite du premier véhicule 170 pourrait de plus être utilisé afin d'attribuer le taux de probabilité le plus élevé.

Lorsque l'étape G350 est réitérée en continu, chaque hypothèse de position future peut être déterminée en fonction d'une hypothèse de trajectoire déterminée. L'hypothèse concerne alors la position future à la fin de la durée associée à la trajectoire déterminée. L'hypothèse de position future peut en outre être déterminée à partir de la vitesse du premier véhicule 170 obtenue par le deuxième terminal 130 et/ou le trafic aux alentours de la position de géolocalisation du premier véhicule 170.

En variante, les hypothèses de positions futures sont déterminées par pas de temps prédéfinis (10 secondes par exemple), et ce jusqu'à la fin de la durée associée à la trajectoire déterminée. Un taux de probabilité peut être associé à chaque hypothèse de position future.

Le deuxième terminal 130 ayant détecté le premier véhicule 170 peut en outre mettre en œuvre une action selon une instruction telle qu'envoyée aux étapes F380 et/ou F395 décrites ci-après.

Les étapes G350 et G355 sont typiquement réitérées un ou plusieurs fois, par le même élément de détection ED ou un élément de détection ED différent. Les étapes G350 et G355 sont ainsi typiquement mises en œuvre de manière périodique ou en continu.

Les étapes F330 de détermination d'éléments de détection et l'étape F340 d'envoi d'un message d'alerte peuvent être réitérées suite à chaque réitération des étapes G350 et G355. La première zone géographique ZO est alors remplacée par une zone géographique estimée à partir de la ou les hypothèses de trajectoire et/ou de position futures déterminées à l'étape G350, et la période de temps associée à la première zone géographique ZO est remplacée par la durée déterminée à l'étape G350.

En variante, les étapes G350 et G355 ne sont pas mises en œuvre car le premier véhicule 170 envoie lui-même le message de localisation ML à l'étape G355, typiquement de manière périodique. Le message de localisation ML comprend typiquement l'élément d'information de localisation et éventuellement un l'élément d'information concernant l'itinéraire suivi par premier véhicule 170. Plus précisément, lorsque le signalement SI envoyé à l'étape E310 comprend un élément de caractérisation indiquant que le premier véhicule 170 est apte à (capable de) communiquer avec le serveur distant 120, et que le premier véhicule 170 envoie le message de localisation ML, les étapes G350 et G355 ne sont pas mises en œuvre.

Dans une étape F360, le serveur distant 120 détermine, parmi les éléments 180 de voie de circulation dont les éléments d'identification EI, de caractérisation ECA et/ou contextuels ECO ont été envoyés aux étapes G320 et G325, un ou plusieurs véhicules appelés ci-après véhicules intervenants ELI.

Chaque véhicule intervenant ELI est déterminé en fonction :
- d'au moins une hypothèse de trajectoire du premier véhicule 170 et/ou au moins une hypothèse de position future du premier véhicule 170, déterminées à l'étape G350,
- d'au moins un élément contextuel envoyé à l'étape G325, et/ou
- d'au moins un élément de caractérisation ECA envoyé à l'étape G320, tel que l'élément de caractérisation ECA indiquant la capacité d'intervention.

Chaque véhicule intervenant ELI est typiquement déterminé parmi les véhicules 180 pour lesquels un élément de caractérisation ECA indiquant la capacité d'intervention a été envoyé à l'étape G320.

Par exemple un seul véhicule intervenant ELI peut être déterminé, le véhicule intervenant ELI étant typiquement un véhicule d'intérêt général prioritaire (tel qu'une ambulance, un camion de pompier ou un véhicule de police).

Le véhicule intervenant ELI est le véhicule 180 susceptible de se positionner au plus près du premier véhicule 170 le plus rapidement compte tenu de toutes les hypothèses de trajectoires et/ou hypothèses de positions futures déterminées.

En variante, un véhicule intervenant ELI est déterminé pour chaque hypothèse de trajectoire et/ou hypothèse de position future. Plusieurs véhicules intervenants ELI peuvent alors être déterminés, chaque véhicule intervenant ELI étant typiquement un véhicule d'intérêt général prioritaire, chaque véhicule intervenant ELI étant le véhicule 180 susceptible de se positionner au plus près du premier véhicule 170 le plus rapidement compte tenu d'au moins une des hypothèses de trajectoires et/ou hypothèses de positions futures déterminées. Chaque véhicule intervenant ELI est alors affecté à l'hypothèse de trajectoire et/ou hypothèse de position future pour lequel il est susceptible de se positionner au plus près du premier véhicule 170 le plus rapidement.

Pour chaque véhicule d'intérêt général prioritaire 180, la position, la vitesse et/ou la catégorie de de véhicule d'intérêt général prioritaire 180 peuvent notamment être pris en compte afin d'estimer la durée potentielle EsDu nécessaire à ce véhicule d'intérêt général prioritaire 180 pour rejoindre le premier véhicule 170 (étape F362).

Chaque durée potentielle EsDu peut en outre être estimée à partir de la typologie des voies de circulations de l'itinéraire permettant à un véhicule d'intérêt général prioritaire 180 de rejoindre le premier véhicule 170, et/ou le nombre de véhicules sur ces voies de circulation, ainsi qu'éventuellement le nombre de véhicules aptes mettre en œuvre une instruction permettant de laisser passer le véhicule intervenant ELI, par exemple telle qu'envoyée à l'étape F380 décrite ci-après.

Le véhicule d'intérêt général prioritaire 180 correspondant à la durée potentielle EsDu minimale est alors déterminé comme étant le véhicule intervenant ELI.

Le véhicule intervenant ELI peut en outre être déterminé à partir de contraintes économiques et/ou techniques, telles que la consommation en carburant des véhicules d'intérêt général prioritaires 180.

En variante, chaque véhicule intervenant ELI n'est pas déterminé parmi les véhicules 180 pour lesquels un élément de caractérisation ECA indiquant la capacité d'intervention a été envoyé à l'étape G320, mais peut être déterminé parmi des éléments 180 de voie de circulation/éléments de détection ED ayant indiqué via le deuxième terminal 130 associé, dans une étape préalable telle que l'étape G320, son accord pour être déterminé comme étant un véhicule intervenant ELI. Cette variante est typiquement mise en œuvre lorsque le premier véhicule 170 est en état d'urgence et lorsque le signalement SI envoyé à l'étape 310 comprend un élément de caractérisation indiquant que le premier véhicule 170 n'est pas apte (capable) de communiquer avec le serveur distant 120.

Chaque véhicule intervenant ELI est typiquement déterminé parmi les véhicules de détection ED déterminés lors d'une réitération de la mise en œuvre de l'étape F330, lorsque la première zone géographique ZO est remplacée par une zone géographique estimée à partir de la ou les hypothèses de trajectoire et/ou de position futures déterminées à l'étape G350, et la période de temps associée à la première zone géographique ZO est remplacée par la durée déterminée à l'étape G350, chaque élément de détection ED étant alors ajouté à une liste de véhicules.

La détermination du ou des véhicules intervenants ELI est réalisée dans cette variante de la même manière que pour les véhicules d'intérêt général prioritaires. En variante, plusieurs véhicules successifs sont déterminés de cette manière, ce qui permet de mieux cerner les déplacements du premier véhicule 170.

Dans cette variante où le véhicule intervenant ELI est un véhicule classique, un véhicule d'intérêt général prioritaire peut quand même rejoindre le premier véhicule 170. Le véhicule intervenant ELI cesse alors d'être un véhicule intervenant ELI lorsque le véhicule d'intérêt général prioritaire rejoint le premier véhicule 170.

Dans une étape F365, pour chaque véhicule intervenant ELI le serveur distant 120 peut déterminer un scénario de guidage SG du véhicule intervenant ELI vers le premier véhicule 170, ou encore un point de jonction entre le véhicule intervenant ELI et le premier véhicule 170. Le scénario de guidage SG comprend une ou plusieurs instructions de guidage permettant au véhicule intervenant ELI de rejoindre le premier véhicule 170.

Plus précisément, les instructions de guidage permettent de guider le véhicule intervenant ELI vers le point de jonction au terme de la durée potentielle EsDu. Lorsque plusieurs hypothèses de trajectoire sont déterminées à l'étape G350 de détection, le scénario de guidage du véhicule intervenant ELI peut être déterminé de sorte à rapprocher le véhicule intervenant ELI d'une zone géographique basée sur les hypothèses de trajectoire s'il n'est pas déjà dans cette zone.

Ensuite ou en variante, l'hypothèse de trajectoire ayant le taux de probabilité le plus élevé peut être sélectionnée par le serveur distant 120. En variante, l'hypothèse de trajectoire est sélectionnée par un utilisateur du véhicule intervenant ELI, le deuxième terminal 130 transmettant alors cette sélection au serveur distant 120. Par exemple, lorsque le véhicule intervenant ELI est un véhicule de police devant rejoindre un véhicule volé, un policier peut sélectionner une zone vers laquelle il suppose que ce véhicule volé se rendra, pour des raisons historiques (quartier associé au vol de véhicules) ou géographique (zone où il est plus facile de se déplacer rapidement).

Le serveur distant 120 peut alors déterminer l'hypothèse de position future pour laquelle le véhicule intervenant ELI aura rejoint le premier véhicule 170 au terme de la durée potentielle EsDu, cette position future étant appelée point de jonction. L'itinéraire du véhicule intervenant ELI et donc le scénario de guidage peuvent alors être déterminés à partir du point de jonction.

Dans une étape F370, le serveur distant 120 envoie, via le réseau de télécommunications 160, un message d'instruction d'intervention MII à chaque véhicule intervenant ELI déterminé à l'étape F360, le message d'instruction d'intervention MII étant typiquement reçu à une étape G370 par le deuxième terminal 130 associé au véhicule intervenant ELI.

Le message d'instruction d'intervention comprend typiquement une instruction d'intervention, indiquant au véhicule d'intervention de rejoindre le premier véhicule 170 de sorte à lui ouvrir la voie lorsque le premier véhicule 170 est en état d'urgence, ou de sorte à arrêter le premier véhicule 170 lorsque le premier véhicule 170 est en état d'infraction.

De plus, le message d'instruction d'intervention peut comprendre le scénario de guidage ou le point de jonction déterminés à l'étape F365. Le message d'instruction d'intervention peut en outre comprendre une instruction d'action comme par exemple actionner un gyrophare ou une sirène.

Lorsque le message d'instruction d'intervention comprend le point de jonction, le point de jonction peut être entré dans le moyen de guidage du véhicule intervenant ELI.

Le premier véhicule 170 étant une destination mouvante et la trajectoire de ce premier véhicule 170 pouvant être modifiée à tout moment, les étapes F365 et F370 peuvent être réitérées une ou plusieurs fois, typiquement en continu ou périodiquement, la période étant de quelques secondes (par exemple toutes les 10 secondes).

Dans une étape F375, le serveur distant 120 détermine un ou plusieurs véhicules dits coopérants VCP parmi les éléments 180 de voie de circulation pour lesquels un ou plusieurs éléments d'identification EI, de caractérisation ECA et/ou contextuel ECO ont été envoyés aux étapes G320 et G325.

Plus précisément, pour chaque véhicule intervenant ELI déterminé à l'étape F360, le serveur distant 120 estime une zone géographique dite deuxième zone géographique, associée au véhicule intervenant ELI en fonction de la position de géolocalisation du véhicule intervenant ELI.

Une période de temps peut être associée à chaque deuxième zone géographique déterminée, et est typiquement déterminée en fonction de la vitesse du véhicule intervenant ELI.

La deuxième zone géographique associée au véhicule intervenant ELI peut être aussi déterminée en fonction de la trajectoire du véhicule intervenant ELI, déterminée à partir du scénario de guidage, la deuxième zone géographique comprenant typiquement la portion d'itinéraire suivie par le véhicule intervenant ELI pendant la période de temps associée.

Le serveur distant 120 détermine le ou les véhicules 180 susceptibles d'être positionnés dans la deuxième zone géographique associée au véhicule intervenant ELI pendant la période de temps associée, en fonction du ou des éléments d'identification EI, de caractérisation ECA et/ou contextuel ECO de ces véhicules, ces véhicules devenant alors des véhicules coopérants VCP.

Dans une étape F380, le serveur distant 120 envoie, via le réseau de télécommunications 160, un message d'instruction de coopération MICP à chaque véhicule coopérant VCP déterminé à l'étape F375. En variante, le ou les messages d'instruction de coopération MICP sont mis à disposition des véhicules coopérants VCP associés (serveur de collecte) par le serveur distant 120, les véhicules coopérants VCP associés pouvant par exemple obtenir les messages d'instruction de coopération MICP au moyen de leur numéro MSISDN.

Chaque message d'instruction de coopération MICP envoyé à un véhicule coopérant VCP est typiquement reçu par le deuxième terminal 130 associé audit véhicule coopérant VCP (étape G380).

Chaque message d'instruction de coopération MICP envoyé à un véhicule coopérant VCP vise à faciliter la progression du véhicule intervenant ELI vers le premier véhicule 170.

Ainsi, chaque message d'instruction de coopération MICP peut comprendre une instruction de laisser le passage à un véhicule intervenant ELI déterminé à l'étape F360. L'instruction de laisser le passage peut comprendre une instruction d'action visant à faciliter la progression du véhicule intervenant ELI vers le premier véhicule 170, par exemple une action à réaliser afin de laisser le passage, associée au véhicule coopérant VCP destinataire du message d'instruction de coopération MICP, l'action permettant de ne pas perturber l'avancée du véhicule intervenant ELI, ou tout du moins à limiter au maximum une éventuelle perturbation de cette avancée.

L'action à réaliser est déterminée par le serveur distant 120. Le serveur distant 120 détermine d'abord, à partir des éléments contextuels du véhicule coopérant VCP et du véhicule intervenant ELI, si, pendant la période de temps associée à la deuxième zone géographique dans laquelle le véhicule coopérant VCP peut se trouver en même temps que le véhicule intervenant ELI, le véhicule coopérant VCP est susceptible de circuler sur la même voie de circulation que le véhicule intervenant ELI ou sur une voie de circulation différente. Si le véhicule coopérant VCP est susceptible de circuler sur la même voie de circulation, il peut être déterminé si le véhicule coopérant VCP est susceptible de circuler :
- sur la même sous voie de circulation que le véhicule intervenant ELI ou sur une autre sous voie de circulation,
- dans le même sens de circulation que le véhicule intervenant ELI ou dans le sens contraire,
- devant le véhicule intervenant ELI ou derrière le véhicule intervenant ELI, et/ou
- à une vitesse inférieure à la vitesse du véhicule intervenant ELI, ou à une vitesse supérieure.

Si le véhicule coopérant VCP est susceptible de circuler sur une voie de circulation différente, il peut être déterminé si le véhicule coopérant VCP arrive sur une intersection entre sa voie de circulation et la voie de circulation du véhicule intervenant ELI.

Des éléments de caractérisation relatifs au véhicule coopérant VCP peuvent en outre être considérés, tels que la catégorie ou la sous-catégorie.

Les éléments d'information recueillis, appelés cadre de la manœuvre par la suite, permettent alors de déterminer une ou plusieurs actions correspondant à la manœuvre à réaliser. Cette détermination est typiquement réalisée conformément à l'étape E430 décrite dans la demande de brevet français FR 1 763 134 (le cadre de la manœuvre correspondant à la notion d'évènement dans cette demande).

Ainsi, une table de correspondance peut être consultée, la table de correspondance comprenant typiquement plusieurs cadres de manœuvre, chaque cadre de manœuvre étant associé avec une ou plusieurs actions pouvant être réalisées, prédéterminées de sorte à laisser le passage au véhicule intervenant ELI.

Chaque action peut être une modification d'un paramètre de conduite, tel qu'un changement de trajectoire ou une modification de vitesse (accélération, ralentissement, arrêt).

Par exemple, un véhicule coopérant VCP donné peut se ranger afin de laisser passer le véhicule intervenant ELI, ou accélérer jusqu'à une portion de voie plus lointaine lui permettant de laisser passer le véhicule intervenant ELI, ou encore céder la priorité au véhicule intervenant ELI à un croisement tel qu'un rond-point ou à un feu de circulation. Dans un autre exemple où le véhicule coopérant VCP est susceptible de circuler sur la même sous voie que le véhicule intervenant ELI et devant le véhicule intervenant ELI, l'action du véhicule coopérant VCP peut être de modifier sa trajectoire afin de typiquement s'écarter vers la droite (dans les pays où les véhicules roulent à droite). Dans un autre exemple où le véhicule coopérant VCP est susceptible de circuler sur une autre sous voie que le véhicule intervenant ELI, devant et dans la direction opposée du véhicule intervenant ELI, l'action du véhicule coopérant VCP peut être de modifier sa trajectoire afin de typiquement s'écarter vers la gauche (dans les pays où les véhicules roulent à droite).

Chaque instruction d'action peut être associée à un instant de départ de réalisation de l'action et/ou une durée prévisionnelle de l'action. En effet, cette action ne doit être réalisée ni trop tôt, car cela perturberait sans raison la circulation, ni trop tard, car cela entraverait l'avancée du véhicule intervenant ELI.

L'instant de départ de réalisation de l'action et/ou la durée prévisionnelle sont obtenus en fonction d'éléments contextuels du véhicule coopérant VCP et/ou du véhicule intervenant ELI. La vitesse, la trajectoire et le sens de déplacement peuvent par exemple être considérés.

L'instant de départ de réalisation de l'action est typiquement sous forme d'un horaire GMT, ou sous forme d'une durée restante. L'instant de départ de réalisation de l'action n'est ainsi pas forcément immédiat.

Le degré d'autonomie du véhicule coopérant VCP peut aussi être pris en compte lors de la détermination de chaque instruction. Par exemple non exhaustif, lorsque le véhicule coopérant VCP est un véhicule autonome d'un niveau adéquat (par exemple niveau 4 ou supérieur), ce véhicule coopérant VCP applique automatiquement l'instruction. Lorsque le véhicule coopérant VCP est un véhicule n'étant pas apte à recevoir le message d'instruction de coopération MICP, le véhicule coopérant VCP ne tient pas compte des instructions, et le véhicule intervenant ELI doit donc en tenir compte pour l'évolution de sa trajectoire et sa vitesse.

Dans une étape G385, un ou plusieurs véhicules coopérants VCP ayant reçu un message d'instruction de coopération MICP (par exemple chaque véhicule coopérant VCP) peut réaliser l'action de l'instruction de laisser le passage de ce message, à l'instant de départ indiqué.

Les étapes F360, F365, F370, F375, F380 et éventuellement l'étape G385 peuvent être réitérées, par exemple jusqu'à ce que le véhicule intervenant ELI ait rejoint le premier véhicule 170.

Dans une étape F390 pouvant être mise en œuvre en même temps que l'étape F380, un ou plusieurs éléments 180 de voie de circulation susceptibles de réaliser une action visant faciliter la circulation du premier véhicule 170 lorsque l'état de crise du premier véhicule 170 est un état d'urgence ou à entraver la circulation du premier véhicule 170 lorsque l'état de crise du premier véhicule 170 est un état d'infraction, sont déterminés par le serveur distant 120, chaque élément 180 étant par la suite appelé élément collaborateur ECL. Plus précisément chaque élément collaborateur ECL est recherché parmi les éléments 180 de voie de circulation pour lesquels un ou plusieurs éléments d'identification EI, de caractérisation ECA et/ou contextuel ECO ont été envoyés aux étapes G320 et G325.

Chaque élément collaborateur ECL est déterminé en fonction d'un ou plusieurs éléments contextuels dudit élément collaborateur ECL, tels que sa position de géolocalisation, son itinéraire prévisionnel, sa vitesse, le trafic aux alentours de sa position de géolocalisation, sa trajectoire prévisionnelle, etc., et en fonction de l'hypothèse de trajectoire du premier véhicule 170 sélectionnée à l'étape F375.

Ainsi, lorsqu'il est déterminé en fonction des éléments contextuels qu'un élément 180 de voie de circulation est susceptible être positionné sur la voie de circulation du premier véhicule 170 et devant ce premier véhicule 170, ou d'être positionné devant le premier véhicule 170 à proximité de cette voie de circulation (par exemple au niveau d'une intersection), ledit élément 180 est alors déterminé comme étant un élément collaborateur ECL.

Dans une étape F395 le serveur distant 120 ou le premier terminal 110 envoie, via le réseau de télécommunications 160, un message d'instruction de collaboration MICL à chaque élément collaborateur ECL déterminé à l'étape F390.

Chaque message d'instruction de collaboration MICL envoyé à un élément collaborateur ECL est typiquement reçu par le deuxième terminal 130 associé audit élément collaborateur ECL (étape G395).

Chaque message d'instruction de collaboration MICL peut comprendre l'élément d'identification du premier véhicule 170, un ou plusieurs éléments de caractérisation et/ou contextuel du premier véhicule 170, l'élément d'information concernant le type et/ou le sous type d'état de crise, et/ou l'hypothèse de trajectoire sélectionnée à l'étape F375.

Chaque message d'instruction peut comprendre une instruction d'action visant à faciliter ou entraver la progression du premier véhicule 170. Chaque instruction d'action peut être associée à un instant de départ de réalisation de l'action et/ou une durée prévisionnelle de l'action.

Lorsque l'état de crise du premier véhicule 170 est un état d'infraction, chaque instruction d'action peut plus précisément viser à établir ou pousser à un changement d'itinéraire du premier véhicule 170, de sorte à ralentir la progression du premier véhicule 170 et ainsi à diminuer la durée nécessaire au véhicule intervenant ELI pour rejoindre le premier véhicule 170.

Lorsque l'élément collaborateur ECL est un véhicule collaborateur, chaque action peut être une modification d'un paramètre de conduite, tel qu'un changement de trajectoire ou une modification de vitesse (typiquement un ralentissement ou un arrêt). Lorsque l'élément collaborateur ECL est un feu de circulation, l'action peut être une modification de la couleur du feu, typiquement un passage au feu rouge.

Plusieurs instructions d'action peuvent ainsi être envoyés à des éléments collaborateurs ECL de sorte à ralentir la circulation sur certaines voies de circulation, de façon à pousser ou contraindre le premier véhicule 170 à choisir une voie de circulation conforme aux souhaits de progression du véhicule intervenant ELI vers le premier véhicule 170.

Une instruction de ralentissement ou d'arrêt peut par exemple être envoyée à un ou plusieurs véhicules collaborateurs ECL positionnés devant le premier véhicule 170 et sur la même voie de circulation, une quinzaine de véhicules pouvant par exemple être positionnés entre le premier véhicule 170 et les véhicules collaborateurs ECL afin de limiter le risque de représailles de la part des occupants du premier véhicule 170.

Une instruction de ralentissement ou d'arrêt peut aussi être envoyée à un ou plusieurs véhicules collaborateurs ECL positionnés devant le premier véhicule 170 et une autre voie de circulation, afin de minimiser les chances que le premier véhicule 170 s'engage sur cette autre voie de circulation.

Une instruction de passage à un feu rouge peut en outre être envoyée à un feu de circulation afin qu'il passe au rouge plus rapidement que prévu.

Un message d'instruction peut en outre être envoyé au premier véhicule 170, de sorte à modifier le moyen de guidage du premier véhicule 170. Par exemple, une instruction envoyée peut modifier le moyen de guidage de sorte qu'il signale un embouteillage fictif sur des voies de circulation pour lesquelles il n'est pas souhaitable que le premier véhicule 170 s'engage, ou encore de sorte qu'il signale un sens unique fictif.

Le moyen de guidage peut alors proposer une autre voie de circulation, par exemple une voie sans issue. Une telle proposition peut en outre faire partie de l'instruction du message d'instruction envoyé.

Lorsque l'état de crise du premier véhicule 170 est un état d'urgence, chaque message d'instructions de collaboration MICL peut comprendre une instruction de laisser le passage au premier véhicule 170. L'instruction de laisser le passage peut comprendre une sous instruction d'action à réaliser afin de laisser le passage, associée à l'élément collaborateur ECL, typiquement déterminée de la même manière que l'action déterminée à l'étape F380.

Chaque action peut être ainsi une modification d'un paramètre de conduite, tel qu'un changement de trajectoire ou une modification de vitesse (accélération, ralentissement, arrêt).

Dans une étape G398, au moins un élément collaborateur ECL ayant reçu un message d'instruction de collaboration MICL met en œuvre l'instruction de ce message, typiquement à l'instant de départ indiqué.

Les étapes F390, F395 et éventuellement l'étape G398 peuvent être réitérées, par exemple jusqu'à ce que le premier véhicule 170 ait atteint le point d'arrivée confirmé ou jusqu'à ce que le premier véhicule 170 soit à l'arrêt.

Les étapes F310, F320, F325, F330, F332, F334, F340, F355, F360, F365, F370, F375, F380, F390, F395 sont typiquement mises en œuvre par le serveur distant 120. En variante, une ou plusieurs de ces étapes peut être mise en œuvre par un deuxième terminal 130 associé à un élément 180 de voie de circulation et/ou le premier terminal 110 associé au premier véhicule 170.

## Revendications

1. Procédé (300) de gestion d'un état de crise d'un premier véhicule (170) comprenant les étapes suivantes :
- estimation (F332), par le dispositif de gestion (120, 130), d'une zone géographique (ZO) dans laquelle le premier véhicule (170) est susceptible d'être positionné pendant une période de temps donnée, et
- envoi (F340), par le dispositif de gestion (120, 130) et à destination d'au moins un élément de détection (ED), d'un message d'alerte (MA), ledit au moins un élément de détection (ED) étant positionné au niveau d'une voie de circulation, ledit au moins un élément de détection (ED) étant susceptible d'être positionné dans la première zone géographique (ZO) pendant la période de temps donnée, le message d'alerte (MA) comprenant un élément d'identification du premier véhicule permettant la détection du premier véhicule par ledit au moins un élément de détection (ED), et
- réception (F355), par le dispositif de gestion (120, 130) et en provenance dudit au moins un élément de détection (ED), d'un message de localisation (ML) du premier véhicule (170), comprenant au moins une hypothèse de trajectoire et/ou au moins une hypothèse de position future du premier véhicule (170).

2. Procédé (300) de gestion selon la revendication 1, dans lequel la zone géographique est estimée en fonction de ladite au moins une hypothèse de trajectoire et/ou au moins une hypothèse de position future du premier véhicule reçues.

3. Procédé (300) de gestion selon la revendication 1 ou 2, dans lequel la durée de la période de temps est déterminée en fonction d'au moins un élément parmi les éléments suivants :
- une vitesse de déplacement potentielle du premier véhicule (170),
- un nombre d'alternatives de voies de circulation potentielles par unité de surface dans une zone autour du premier véhicule (170),
- un trafic estimé sur la trajectoire du premier véhicule (170).

4. Procédé (300) de gestion selon l'une quelconque des revendications 1 à 3, comprenant en outre les étapes suivantes :
- détermination (F360), par le dispositif de gestion (120, 130), d'un véhicule intervenant (ELI) en fonction de ladite au moins une hypothèse de trajectoire et/ou au moins une hypothèse de position future, le véhicule intervenant (ELI) étant un véhicule pour lequel l'estimation d'une durée potentielle (EsDu) nécessaire audit véhicule pour rejoindre le premier véhicule (170) est minimale, et
- envoi (F370) par le dispositif de gestion (120, 130) et à destination d'un terminal (130) associé au véhicule intervenant (ELI), d'un message instruction d'intervention (MII) comprenant une instruction d'intervention.

5. Procédé (300) de gestion selon la revendication 4, dans lequel le message d'instruction d'intervention (MII) comprend en outre un scénario de guidage (SG) du véhicule intervenant (ELI) vers le premier véhicule (170), ledit scénario de guidage (SG) comprenant des instructions de guidage.

6. Procédé (300) de gestion selon la revendication 4 ou 5, comprenant en outre les étapes suivantes :
- estimation, par le dispositif de gestion (120, 130), d'une deuxième zone géographique associée audit véhicule intervenant (ELI), en fonction d'une position de géolocalisation du véhicule intervenant (ELI),
- détermination (F375), par le dispositif de gestion (120, 130), d'au moins un véhicule coopérant (VCP) susceptible d'être positionné dans ladite deuxième zone géographique,
- envoi (F380), par le dispositif de gestion (120, 130) et à destination d'un terminal (130) associé audit au moins un véhicule coopérant (VCP), d'un message d'instruction de coopération (MICP) comprenant une instruction d'action visant à faciliter la progression du véhicule intervenant (ELI) vers le premier véhicule (170).

7. Procédé (300) de gestion selon l'une quelconque des revendications 4 à 6, comprenant en outre les étapes suivantes :
- détermination (F390), par le dispositif de gestion (120, 130), d'au moins un élément collaborateur (ECL) susceptible d'être positionné devant le premier véhicule (170), en fonction de ladite au moins une hypothèse de trajectoire et/ou au moins une hypothèse de position future,
- envoi (F395) , par le dispositif de gestion (120, 130) et à destination d'un terminal (130) associé audit au moins un élément collaborateur (ECL), d'un message d'instruction de collaboration (MICL) comprenant une instruction d'action visant à faciliter ou entraver la progression du premier véhicule (170), de sorte à diminuer la durée nécessaire (EsDu) au véhicule intervenant (ELI) pour rejoindre le premier véhicule (170).

8. Procédé (300) de gestion selon la revendication 6 ou 7, dans lequel :
- l'instruction d'action est associée à un instant de départ de l'action et/ou une durée prévisionnelle de l'action, et
- l'instruction d'action porte sur la modification d'un paramètre de conduite.

9. Dispositif de gestion (120, 130) d'un état de crise d'un premier véhicule (170) comprenant :
- un module d'estimation apte à estimer une zone géographique (ZO) dans laquelle le premier véhicule (170) est susceptible d'être positionné pendant une période de temps donnée,
- un module d'envoi apte à envoyer un message d'alerte (MA) à au moins un élément de détection (ED), positionné au niveau d'une voie de circulation, ledit au moins un élément de détection (ED) étant susceptible d'être positionné dans la première zone géographique (ZO) pendant la période de temps donnée, le message d'alerte (MA) comprenant un élément d'identification du premier véhicule permettant la détection du premier véhicule par l'élément de détection (ED), et
- un module de réception (F355) apte à recevoir un message de localisation (ML) du premier véhicule (170), comprenant au moins une hypothèse de trajectoire et/ou au moins une hypothèse de position future du premier véhicule (170), ledit message de localisation (ML) étant envoyé en provenance dudit au moins un élément de détection (ED).

10. Programme d'ordinateur (P1) comportant des instructions pour l'exécution des étapes du procédé de gestion selon l'une quelconque des revendications 1 à 8 lorsque ledit programme est exécuté par un ordinateur.

11. Support d'enregistrement lisible par un ordinateur sur lequel est enregistré un programme d'ordinateur (P1) comprenant des instructions pour l'exécution des étapes du procédé de gestion selon l'une quelconque des revendications 1 à 8.

## Patentansprüche

1. Verfahren (300) zur Verwaltung eines Notzustands eines ersten Fahrzeugs (170), umfassend die folgenden Schritte:
- Schätzen (F332), durch die Verwaltungsvorrichtung (120, 130), eines geografischen Gebiets (ZO), in dem das erste Fahrzeug (170) während eines gegebenen Zeitraums positioniert sein kann, und
- Senden (F340), durch die Verwaltungsvorrichtung (120, 130) und an mindestens ein Detektionselement (ED), einer Warnmeldung (MA), wobei das mindestens eine Detektionselement (ED) an einem Fahrweg positioniert ist, wobei mindestens ein Detektionselement (ED) während des gegebenen Zeitraums in dem ersten geografischen Gebiet (ZO) positioniert sein kann, wobei die Warnmeldung (MA) ein Element zur Identifizierung des ersten Fahrzeugs umfasst, das die Detektion des ersten Fahrzeugs durch das mindestens eine Detektionselement (ED) ermöglicht, und
- Empfangen (F355), durch die Verwaltungsvorrichtung (120, 130) und von dem mindestens einen Detektionselement (ED), einer Lokalisierungsmeldung (ML) für das erste Fahrzeug (170), die mindestens eine Trajektorienhypothese und/oder mindestens eine Hypothese für die zukünftige Position des ersten Fahrzeugs (170) umfasst.

2. Verfahren (300) zur Verwaltung nach Anspruch 1, wobei das geografische Gebiet in Abhängigkeit von der empfangenen mindestens einen Trajektorienhypothese und/oder von der empfangenen mindestens einen Hypothese für die zukünftige Position des ersten Fahrzeugs geschätzt wird.

3. Verfahren (300) zur Verwaltung nach Anspruch 1 oder 2, wobei die Dauer des Zeitraums in Abhängigkeit von mindestens einem Element unter den folgenden Elementen bestimmt wird:
- einer potentiellen Fortbewegungsgeschwindigkeit des ersten Fahrzeugs (170),
- einer Anzahl von potentiellen Fahrwegalternativen je Flächeneinheit in einem Gebiet um das erste Fahrzeug (170) ;
- einem geschätzten Verkehr auf der Trajektorie des ersten Fahrzeugs (170).

4. Verfahren (300) zur Verwaltung nach einem der Ansprüche 1 bis 3, umfassend ferner die folgenden Schritte:
- Bestimmen (F360), durch die Verwaltungsvorrichtung (120, 130), eines Einsatzfahrzeugs (ELI) in Abhängigkeit von der mindestens einen Trajektorienhypothese und/oder mindestens einen Hypothese für die zukünftige Position, wobei das Einsatzfahrzeug (ELI) ein Fahrzeug ist, für das die Schätzung einer von dem Fahrzeug zum Erreichen des ersten Fahrzeugs (170) benötigten potentiellen Dauer (EsDu) minimal ist, und
- Senden (F370), durch die Verwaltungsvorrichtung (120, 130) und an ein Endgerät (130), das dem Einsatzfahrzeug (ELI) zugeordnet ist, einer Einsatzanweisungsmeldung (MII), die eine Einsatzanweisung umfasst.

5. Verfahren (300) zur Verwaltung nach Anspruch 4, wobei die Einsatzanweisungsmeldung (MII) ferner ein Führungsszenario (SG) zum Führen des Einsatzfahrzeugs (ELI) zu dem ersten Fahrzeug (170) umfasst, wobei das Führungsszenario (SG) Führungsanweisungen umfasst.

6. Verfahren (300) zur Verwaltung nach Anspruch 4 oder 5, umfassend ferner die folgenden Schritte:
- Schätzen, durch die Verwaltungsvorrichtung (120, 130), eines zweiten geografischen Gebiets, das dem Einsatzfahrzeug (ELI) zugeordnet ist, in Abhängigkeit von einer Geolokalisierungsposition des Einsatzfahrzeugs (ELI),
- Bestimmen (F375), durch die Verwaltungsvorrichtung (120, 130), mindestens eines kooperierenden Fahrzeugs (VCP), das in dem zweiten geografischen Gebiet positioniert sein kann;
- Senden (F380), durch die Verwaltungsvorrichtung (120, 130) und an ein Endgerät (130), das dem mindestens einen kooperierenden Fahrzeug (VCP) zugeordnet ist, einer Kooperationsanweisungsmeldung (MICP), die eine Handlungsanweisung umfasst, die darauf abzielt, das Vorankommen des Einsatzfahrzeugs (ELI) zu dem ersten Fahrzeug (170) zu erleichtern.

7. Verfahren (300) zur Verwaltung nach einem der Ansprüche 4 bis 6, umfassend ferner die folgenden Schritte:
- Bestimmen (F390), durch die Verwaltungsvorrichtung (120, 130), mindestens eines kollaborierenden Elements (ECL), das vor dem ersten Fahrzeug (170) positioniert sein kann, in Abhängigkeit von der mindestens einen Trajektorienhypothese und/oder mindestens einen Hypothese für die zukünftige Position,
- Senden (F395), durch die Verwaltungsvorrichtung (120, 130) und an ein Endgerät (130), das dem mindestens einen kollaborierenden Element (ECL) zugeordnet ist, einer Kollaborationsanweisungsmeldung (MICL), die eine Handlungsanweisung umfasst, die darauf abzielt, das Vorankommen des ersten Fahrzeugs (170) zu erleichtern oder zu erschweren, so dass die von dem Einsatzfahrzeug (ELI) zum Erreichen des ersten Fahrzeugs (170) benötigte Dauer (EsDu) verringert wird.

8. Verfahren (300) zur Verwaltung nach Anspruch 6 oder 7, wobei:
- die Handlungsanweisung einem Beginnzeitpunkt der Handlung und/oder einer voraussichtlichen Dauer der Handlung zugeordnet ist, und
- die Handlungsanweisung sich auf die Änderung eines Fahrparameters bezieht.

9. Verwaltungsvorrichtung (120, 130) zur Verwaltung eines Notzustands eines ersten Fahrzeugs (170), umfassend:
- ein Schätzmodul, das geeignet ist, ein geografisches Gebiet (ZO) zu schätzen, in dem das erste Fahrzeug (170) während eines gegebenen Zeitraums positioniert sein kann,
- ein Sendemodul, das geeignet ist, eine Warnmeldung (MA) an mindestens ein Detektionselement (ED) zu senden, das an einem Fahrweg positioniert ist, wobei das mindestens eine Detektionselement (ED) während des gegebenen Zeitraums in dem ersten geografischen Gebiet (ZO) positioniert sein kann, wobei die Warnmeldung (MA) ein Element zur Identifizierung des ersten Fahrzeugs umfasst, das die Detektion des ersten Fahrzeugs durch das Detektionselement (ED) ermöglicht, und
- ein Empfangsmodul (F355), das geeignet ist, eine Lokalisierungsmeldung (ML) für das erste Fahrzeug (170) zu empfangen, umfassend mindestens eine Trajektorienhypothese und/oder mindestens eine Hypothese für die künftige Position des ersten Fahrzeugs (170) umfasst, wobei die Lokalisierungsmeldung (ML) von dem mindestens einen Detektionselement (ED) gesendet wird.

10. Computerprogramm (P1), das Anweisungen beinhaltet, die bei der Ausführung des Programms durch einen Computer die Schritte des Verfahrens zur Verwaltung nach einem der Ansprüche 1 bis 8 ausführen.

11. Computerlesbares Speichermedium, auf dem ein Computerprogramm (P1) gespeichert ist, das Anweisungen zur Ausführung der Schritte des Verfahrens zur Verwaltung nach einem der Ansprüche 1 bis 8 umfasst.

## Claims

1. Method (300) for managing a state of crisis of a first vehicle (170), comprising the following steps:
- the management device (120, 130) estimating (F332) a geographical area (ZO) in which the first vehicle (170) is liable to be positioned during a given time period, and
- the management device (120, 130) sending (F340) an alert message (MA) to at least one detection element (ED), said at least one detection element (ED) being positioned on a traffic lane, said at least one detection element (ED) being liable to be positioned in the first geographical area (ZO) during the given time period, the alert message (MA) comprising an element for identifying the first vehicle, enabling the first vehicle to be detected by said at least one detection element (ED), and
- the management device (120, 130) receiving (F355), from said at least one detection element (ED), a location message (ML) concerning the location of the first vehicle (170), comprising at least one trajectory hypothesis and/or at least one future position hypothesis of the first vehicle (170).

2. Management method (300) according to Claim 1, wherein the geographical area is estimated on the basis of said received at least one trajectory hypothesis and/or at least one future position hypothesis of the first vehicle.

3. Management method (300) according to Claim 1 or 2, wherein the duration of the time period is determined on the basis of at least one element from among the following elements:
- a potential speed of movement of the first vehicle (170),
- a number of alternative potential traffic lanes per unit area in an area around the first vehicle (170),
- estimated traffic on the trajectory of the first vehicle (170).

4. Management method (300) according to any one of Claims 1 to 3, furthermore comprising the following steps:
- the management device (120, 130) determining (F360) an intervening vehicle (ELI) on the basis of said at least one trajectory hypothesis and/or at least one future position hypothesis, the intervening vehicle (ELI) being a vehicle for which the estimation of a potential duration (EsDu) required by said vehicle to reach the first vehicle (170) is minimal, and
- the management device (120, 130) sending (F370), to a terminal (130) associated with the intervening vehicle (ELI), an intervention instruction message (MII) comprising an intervention instruction.

5. Management method (300) according to Claim 4, wherein the intervention instruction message (MII) furthermore comprises a guidance scenario (SG) for guiding the intervening vehicle (ELI) to the first vehicle (170), said guidance scenario (SG) comprising guidance instructions.

6. Management method (300) according to Claim 4 or 5, furthermore comprising the following steps:
- the management device (120, 130) estimating a second geographical area associated with said intervening vehicle (ELI), on the basis of a geolocation position of the intervening vehicle (ELI),
- the management device (120, 130) determining (F375) at least one cooperating vehicle (VCP) liable to be positioned in said second geographical area,
- the management device (120, 130) sending (F380), to a terminal (130) associated with said at least one cooperating vehicle (VCP), a cooperation instruction message (MICP) comprising an action instruction aimed at facilitating the progress of the intervening vehicle (ELI) to the first vehicle (170).

7. Management method (300) according to any one of Claims 4 to 6, furthermore comprising the following steps:
- the management device (120, 130) determining (F390) at least one collaborating element (ECL) liable to be positioned in front of the first vehicle (170), on the basis of said at least one trajectory hypothesis and/or at least one future position hypothesis,
- the management device (120, 130) sending (F395), to a terminal (130) associated with said at least one collaborating element (ECL), a collaboration instruction message (MICL) comprising an action instruction aimed at facilitating or impeding the progress of the first vehicle (170), so as to reduce the duration (EsDu) required by the intervening vehicle (ELI) to reach the first vehicle (170).

8. Management method (300) according to Claim 6 or 7, wherein:
- the action instruction is associated with a start time of the action and/or a provisional duration of the action, and
- the action instruction relates to the modification of a driving parameter.

9. Management device (120, 130) for managing a state of crisis of a first vehicle (170), comprising:
- an estimation module capable of estimating a geographical area (ZO) in which the first vehicle (170) is liable to be positioned during a given time period,
- a sending module capable of sending an alert message (MA) to at least one detection element (ED) positioned on a traffic lane, said at least one detection element (ED) being liable to be positioned in the first geographical area (ZO) during the given time period, the alert message (MA) comprising an element for identifying the first vehicle, enabling the first vehicle to be detected by the detection element (ED), and
- a reception module (F355) capable of receiving a location message (ML) concerning the location of the first vehicle (170), comprising at least one trajectory hypothesis and/or at least one future position hypothesis of the first vehicle (170), said location message (ML) being sent from said at least one detection element (ED).

10. Computer program (P1) comprising instructions for executing the steps of the management method according to any one of Claims 1 to 8 when said program is executed by a computer.

11. Computer-readable recording medium on which there is recorded a computer program (P1) comprising instructions for executing the steps of the management method according to any one of Claims 1 to 8.
